# EUROPEAN PATENT APPLICATION

(11) **EP 4 715 717 A1**
(43) Date of publication of application: **25.03.2026**
(21) Application number: 24881984.9
(22) Date of filing: 01.08.2024
(51) Int. Cl.: G06Q 30/06, G07G 1/12, G07G 1/14

(54) **INFORMATION PROCESSING DEVICE AND INFORMATION PROCESSING PROGRAM**

(30) Priority: 26.10.2023 JP 2023183653
(71) Applicant: Toshiba TEC Kabushiki Kaisha, Tokyo 141-8562 (JP)
(72) Inventor: NAGATA, Hiroto, Tokyo 141-8562 (JP)
(74) Representative: Bandpay & Greuter
(86) International application number: PCT/JP2024/027493
(87) International publication number: WO 2025/088866

(57) **Abstract**

An information processing device according to an embodiment includes acquisition means, storage means, and transmission means, in which the information processing device is communicably connected to a higher level external device, communicates with a plurality of devices provided in a store in which the information processing device is installed, and performs information processing for the store on the basis of information transmitted from each of the devices. The acquisition means acquires product sales information indicating a product for which payment has been made on the device. The storage means stores the product sales information acquired by the acquisition means, in a storage unit. The transmission means transmits the product sales information stored in the storage unit to the external device at predetermined timing.

## Description

### FIELD

Embodiments of the present invention relate to an information processing device and an information processing program.

### BACKGROUND

Conventionally, a cloud server (head office server) that manages chain stores has been installed in a head office, and an information processing device (hereinafter, also referred to as edge server) such as a store server installed in each of the stores has been connected to the cloud server. The edge server is also connected to a plurality of devices (hereinafter, also referred to as edge devices) such as a printer, a scanner, a drawer, and a change machine, in addition to a point of sale (POS) terminal that performs main operations in a store, and controls and manages the plurality of edge devices.

The edge server is configured to be connected to the POS terminal and the plurality of edge devices via a network provided in the store. Therefore, for example, when transmission and reception increase in communication between the edge server and the edge devices, delay in communication may occur, and a delay or an error may occur in transmission and reception of information with the POS terminal.

### SUMMARY OF THE INVENTION

### Problem to be Solved by the Invention

An object of the present invention is to provide an information processing device and an information processing program that are configured to reduce occurrence of delay in communication between the information processing device and a plurality of devices.

### Means for Solving Problem

An information processing device of the embodiment is communicably connected to a higher-level external device and communicates with a plurality of devices provided in a store in which the information processing device is installed. Based on information transmitted from said devices, it performs information processing related to the store. It comprises acquisition means, storage means, and transmission means. The acquisition means acquires product sales information indicating products settled by the devices. The storage means stores the product sales information acquired by the acquisition means in a storage unit. The transmission means transmits the product sales information stored in the storage unit to the external device at predetermined timing.

### BRIEF DESCRIPTION OF DRAWINGS

FIG. 1 is a schematic diagram illustrating an example of an information processing system according to the present embodiment.
FIG. 2 is a block diagram illustrating an exemplary hardware configuration of a cloud server according to the present embodiment.
FIG. 3 is a block diagram illustrating an exemplary hardware configuration of an edge server according to the present embodiment.
FIG. 4 is a block diagram illustrating an exemplary hardware configuration of a first tablet terminal according to the present embodiment.
FIG. 5 is a block diagram illustrating an exemplary functional configuration of the first tablet terminal according to the present embodiment.
FIG. 6 is a block diagram illustrating an exemplary functional configuration of the edge server according to the present embodiment.
FIG. 7 is a sequence diagram illustrating an example of a control process in an information processing system 10 according to the present embodiment.

### DETAILED DESCRIPTION

Hereinafter, embodiments of an information processing device and an information processing program will be described with reference to the accompanying drawings. In the embodiments described below, an edge server as an example of the information processing device will be described. In addition, a cloud server as an example of an external device will be described. Note that the embodiments are each an embodiment of the information processing device and the information processing program, and the configurations, functions, and the like thereof do not limit the invention.

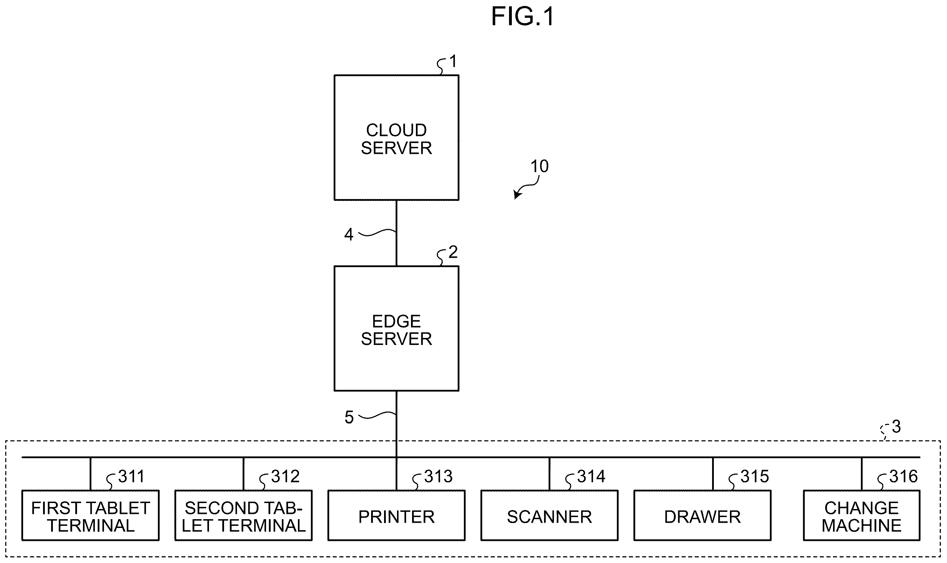

FIG. 1 is a schematic diagram illustrating an example of an information processing system 10 according to the present embodiment. The information processing system 10 is a system including a cloud server 1, an edge server 2, and an edge device 3.

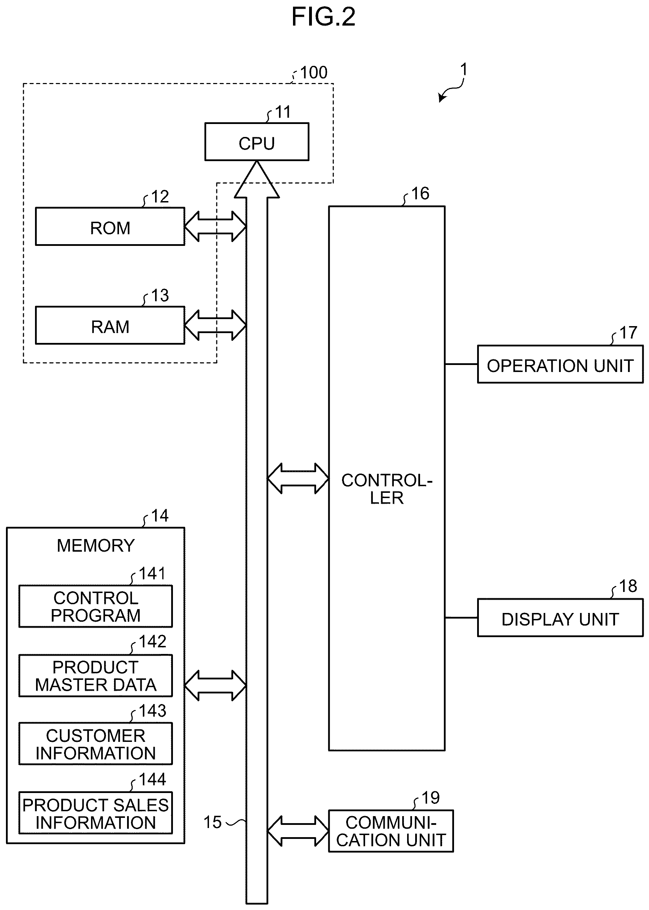

The cloud server 1 is, for example, a server installed in a head office of a company. The cloud server 1 includes one or a plurality of computers. The cloud server 1 transmits product master data 142 (see FIG. 2) to the edge server 2 in each store. The product master data 142 is information in which code information such as a product code uniquely assigned to each product is associated with product information such as a name, price, and product classification of the product. In addition, the cloud server 1 receives customer information 143 (see FIG. 2) from the edge server 2 in each store, for management. The customer information 143 is various information relating to a customer name, a customer identification (ID) for identifying a customer, and the like.

Furthermore, the cloud server 1 receives product sales information 144 (see FIG. 2) from the edge server 2 in each store, for management. The product sales information 144 is information generated by registration processing and payment processing for each product by a first tablet terminal 311, and indicates information related to registration processing and payment processing for the product. In other words, the cloud server 1 is a server enabling reception of the product sales information indicating information related to the registration processing and payment processing for each product from the edge server 2 via a communication network 4.

The cloud server 1 transmits the product master data 142 to the edge server 2 in each store, and therefore, products are allowed to be sold at the same prices at each store. In addition, the cloud server 1 manages the customer information 143 and the product sales information 144, and therefore, customers who purchase products at each store and a trend of sales of the products are allowed to be analyzed. Furthermore, the cloud server 1 is connected to the edge server 2 in each store via, for example, the communication network 4 that is a dedicated network or Internet network.

The edge server 2 is a server device that is communicably connected to the cloud server 1 at a higher level, communicates with a plurality of edge devices 3 provided in a store in which the edge server 2 is installed, and performs information processing for the store on the basis of information transmitted from the devices. The edge server 2 communicates with the plurality of edge devices 3 included in the store in which the edge server 2 is installed to control and manage these edge devices 3.

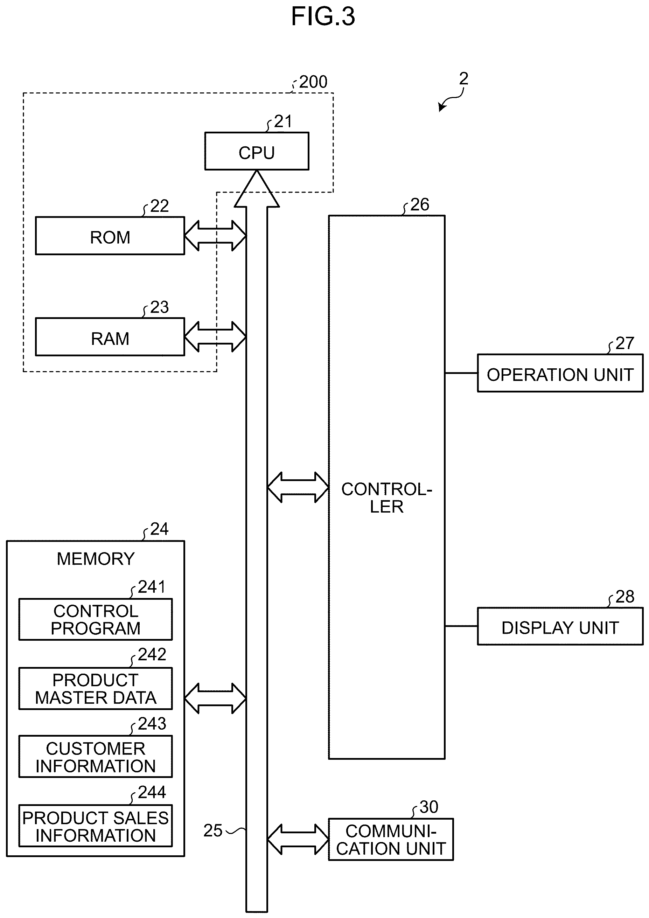

Specifically, the edge server 2 performs information processing for the store on the basis of the information transmitted from these edge devices 3. For example, the edge server 2 collects the product sales information (see FIG. 3) including the product information about each product after payment processing through each POS terminal, and manages the sales at the store. In addition, the edge server 2 is connected to the cloud server 1 via, for example, the communication network 4 that is a dedicated network or Internet network. Furthermore, the edge server 2 is connected to the plurality of edge devices 3 in the store via, for example, a communication network 5 such as a local area network (LAN).

Each of the plurality of edge devices 3 is a device provided in the store, and is communicably connected to the edge server 2 via the communication network 5. The plurality of edge devices 3 is an example of a plurality of devices. The plurality of edge devices 3 includes, for example, the first tablet terminal 311, a second tablet terminal 312, a printer 313, a scanner 314, a drawer 315, and a change machine 316.

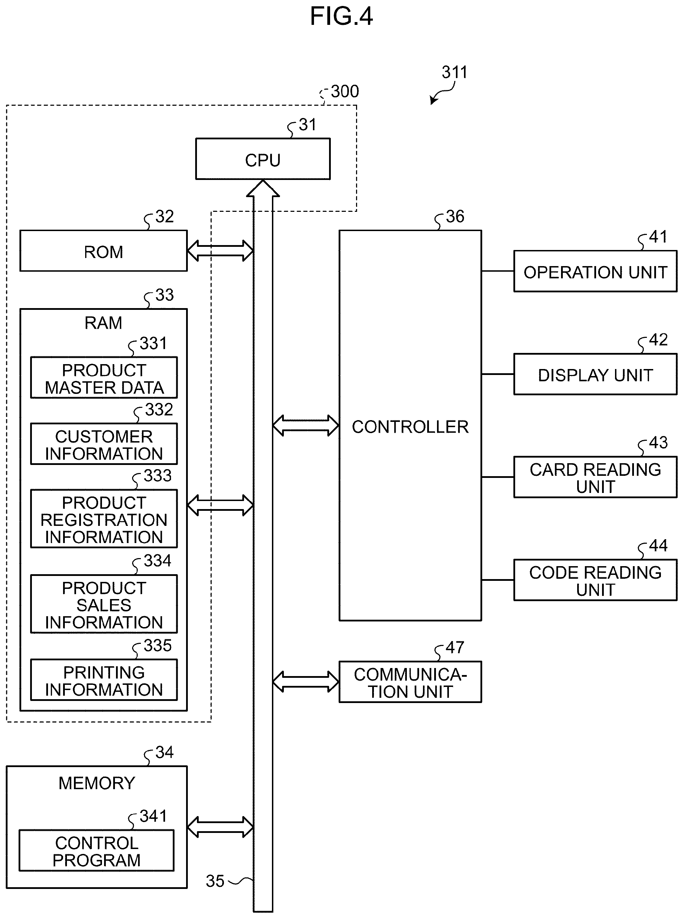

The first tablet terminal 311 performs product registration processing for each product sold in a store. The product registration processing includes processing of calling and displaying product information such as a product name and price of the product, on the basis of a product code identifying a product associated with a symbol applied to the product read by the scanner 314, which will be described later, and storing the product information in a memory 34 (see FIG. 4). In addition, the first tablet terminal 311 generates printing information 335 (see FIG. 4) for printing details of transaction on a receipt, on the basis of product sales information 334 (see FIG. 4) indicating the information related to the payment processing, and outputs the printing information to the second tablet terminal 312 or the printer 313. Note that the first tablet terminal 311 may acquire a value obtained by reading the symbol applied to the product, from the scanner 314.

Furthermore, the payment processing includes processing of displaying a total amount of money and an amount of change (hereinafter referred to as "product sales information") related to a transaction with a customer, in addition to processing of payment for the product, on the basis of the product information about the product after the product registration processing. The payment processing includes processing of issuing the receipt where the product information and product sales information 334 (printing information 335) about the product for which payment has been made are printed. The first tablet terminal 311 acquires product master data 342 (see FIG. 4) used for identification of each product, from the cloud server 1 or the edge server 2, and transmits the product sales information and the like about each product after completion of payment processing, to the cloud server 1 or the edge server 2.

The second tablet terminal 312 is a customer display unit that displays the product information, the product sales information, and the like to each customer. Furthermore, the second tablet terminal 312 receives an operation according to displayed contents. In response to a print instruction request from the first tablet terminal 311, the printer 313 issues the printing information or a slip where the product information and product sales information about the product after the product registration processing are printed.

The scanner 314 is, for example, a handheld device that uses visible light to read a code symbol such as a barcode or a two-dimensional code, passing a value obtained by decoding the code symbol to the first tablet terminal 311. The code symbol read by the scanner 314 is, for example, an encoded product code or an encoded member code. The code symbol indicating the product code is applied to each product or a package of the product. The code symbol indicating the member code is displayed, for example, on an active screen of the second tablet terminal 312 on which member application software is running. Note that the functions of the scanner 314 may be provided in the first tablet terminal 311.

The drawer 315 stores money such as coins and bills. The drawer 315 stores money and securities, such as gift certificates, from the customers, change to be given to the customers, and the like. When cash is used as a payment medium, in the change machine 316, coins and bills to be paid are input, and change is dispensed if necessary. The change machine 316 stores the input bills and coins in the drawer 315. Then, the change machine 316 dispenses the change in bills or coins, in response to a request for dispensing the change, from the first tablet terminal 311.

Next, a hardware configuration of the cloud server 1 will be described with reference to FIG. 2. FIG. 2 is a block diagram illustrating an exemplary hardware configuration of the cloud server 1. Note that, in FIG. 2, the cloud server 1 will be described as a single computer, but may be constituted by a plurality of computers.

As illustrated in FIG. 2, the cloud server 1 includes a central processing unit (CPU) 11, a read only memory (ROM) 12, a random access memory (RAM) 13, and a memory 14. The CPU 11 is a subject that performs control. The ROM 12 stores various programs. Programs and various data are loaded into the RAM 13. The memory 14 stores various programs.

The CPU 11, the ROM 12, the RAM 13, and the memory 14 are connected to each other via a bus 15. The CPU 11, the ROM 12, and the RAM 13 constitute a control unit 100. In other words, when the CPU 11 operates according to a control program stored in the ROM 12 or the memory 14 and loaded into the RAM 13, the control unit 100 executes control processing of the cloud server 1 which is described later.

The memory 14 includes a non-volatile memory such as a hard disc drive (HDD) or a flash memory in which stored information is held even when power is turned off. The memory 14 stores a control program 141 that stores a control program for control of the cloud server 1, the product master data 142, the customer information 143, the product sales information 144, and the like.

Furthermore, the control unit 100 is connected to an operation unit 17 and a display unit 18 via the bus 15 and a controller 16. The controller 16 controls the operation unit 17 and the display unit 18, in response to an instruction from the control unit 100. However, for convenience of description, the control performed by the controller 16 is described as control performed by the control unit 100.

The operation unit 17 is, for example, a keyboard or a touch screen, and is operated by an operator of the cloud server 1. The display unit 18 is, for example, a liquid crystal display, and displays various information to the operator of the cloud server 1. Furthermore, the control unit 100 is connected to a communication unit 19 via the bus 15. The communication unit 19 is connected to each edge server 2 via the communication network 4 and transmits and receives various information. Note that the hardware configuration of the cloud server 1 is not limited to this configuration.

Next, a hardware configuration of the edge server 2 will be described with reference to FIG. 3. FIG. 3 is a block diagram illustrating an exemplary hardware configuration of the edge server 2. As illustrated in FIG. 3, the edge server 2 includes a CPU 21, a ROM 22, a RAM 23, a memory 24, and the like. The CPU 21 is a subject that performs control. The ROM 22 stores various programs. Programs and various data are loaded into the RAM 23. The memory 24 stores various programs.

The CPU 21, the ROM 22, the RAM 23, and the memory 24 are connected to each other via a bus 25. The CPU 21, the ROM 22, and the RAM 23 constitute a control unit 200. In other words, when the CPU 21 operates according to a control program stored in the ROM 22 or the memory 24 and loaded into the RAM 23, the control unit 200 executes control processing of the edge server 2 which is described later.

The memory 24 includes a non-volatile memory such as HDD or a flash memory in which stored information is held even when power is turned off. The memory 24 stores a control program 241 that stores a control program for control of the edge server 2, product master data 242, customer information 243, and product sales information 244. The product master data 242, the customer information 243, and the product sales information 244 which are stored in the memory 24 correspond to the product master data 142, the customer information 143, and the product sales information 144 which are stored in the memory 14 in the store where the edge server 2 is placed. The memory 24 is an example of a storage unit.

In addition, the control unit 200 connects an operation unit 27 and a display unit 28 via the bus 25 and a controller 26. The controller 26 controls the operation unit 27 and the display unit 28 in response to an instruction from the control unit 200. However, for convenience of description, the control performed by the controller 26 is described as control performed by the control unit 200.

The operation unit 27 is, for example, a keyboard or a touch screen, and is operated by an operator of the edge server 2. The display unit 28 is, for example, a liquid crystal display, and displays various information to the operator of the edge server 2. Furthermore, the control unit 200 is connected to a communication unit 30 via the bus 25. The communication unit 30 is connected to the cloud server 1 via the communication network 4, and transmits and receives information to and from the cloud server 1. Furthermore, the communication unit 30 is connected to each of the edge devices 3 via the communication network 5 and transmits and receives information to and from the edge device 3. Note that the hardware configuration of the edge server 2 is not limited to this configuration.

Next, a hardware configuration of the first tablet terminal 311 included in the edge devices 3 will be described with reference to FIG. 4. FIG. 4 is a block diagram illustrating an exemplary hardware configuration of the first tablet terminal 311 according to the present embodiment.

As illustrated in FIG. 4, the first tablet terminal 311 includes a CPU 31, a ROM 32, a RAM 33, the memory 34, and the like. The CPU 31 is a subject that performs control. The ROM 32 stores various programs. Programs and various data are loaded into the RAM 33. The memory 34 stores various programs. The CPU 31, the ROM 32, the RAM 33, and the memory 34 are connected to each other via a bus 35. The CPU 31, the ROM 32, and the RAM 33 constitute a control unit 300. In other words, when the CPU 31 operates according to a control program stored in the ROM 32 or the memory 34 and loaded into the RAM 33, the control unit 300 executes control processing of the first tablet terminal 311 which is described later.

The RAM 33 stores product master data 331, customer information 332, product registration information 333, the product sales information 334, and the printing information 335. The printing information 335 is information to be printed on the receipt and corresponding to the product sales information 334 indicating the information related to the payment processing. The product master data 331, the customer information 332, and the product sales information 334 stored in the RAM 33 correspond to the product master data 142, the customer information 143, and the product sales information 144 stored in the memory 14 of the cloud server 1. In addition, the product master data 331, the customer information 332, and the product registration information 333 stored in the RAM 33 correspond to the product master data 242, the customer information 243, and the product sales information 244 stored in the memory 24 of the edge server 2.

The memory 34 includes a non-volatile memory such as HDD or a flash memory in which stored information is held even when power is turned off. The memory 34 stores a control program 341 that stores a control program for controlling the first tablet terminal 311.

In addition, the control unit 300 is connected to an operation unit 41, a display unit 42, and a card reading unit 43 via the bus 35 and a controller 36. The controller 36 controls the operation unit 41, the display unit 42, and the card reading unit 43 in response to an instruction from the control unit 300. However, for convenience of description, the control performed by the controller 36 is described as control performed by the control unit 300.

The operation unit 41 is, for example, a keyboard or a touch screen, and is operated by an operator of the first tablet terminal 311. The display unit 42 is, for example, a liquid crystal display, and displays various information to a sales clerk who is the operator of the first tablet terminal 311. The card reading unit 43 reads a customer code from a card (e.g., credit card, electronic money, or the like) used by each of the customers for payment. The control unit 300 of the first tablet terminal 311 performs the payment processing related to the customer on the basis of the read customer code.

A code reading unit 46 images or optically reads the symbol such as the barcode or the two-dimensional code applied to the product. On the basis of the value obtained by reading the symbol applied to the product by the scanner 314, the control unit 300 of the first tablet terminal 311 executes the product registration processing related to the product. Furthermore, the control unit 300 is connected to a communication unit 47 via the bus 35. The communication unit 47 is connected to the edge server 2 via the communication network 5 and transmits and receives various information. Note that the hardware configuration of the first tablet terminal 311 is not limited to this configuration.

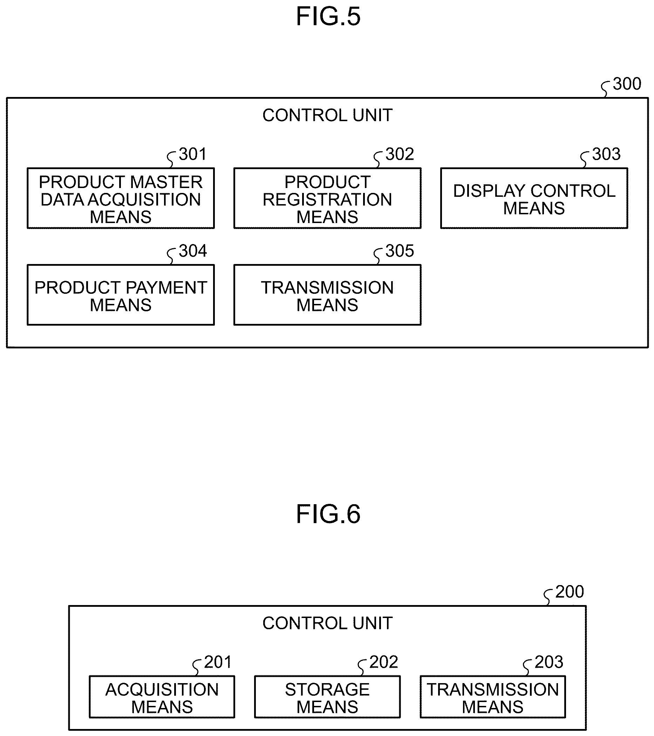

Next, a functional configuration of the first tablet terminal 311 will be described with reference to FIG. 5. FIG. 5 is a block diagram illustrating an exemplary functional configuration of the first tablet terminal 311 according to the present embodiment.

As illustrated in FIG. 5, the control unit 300 of the first tablet terminal 311 includes product master data acquisition means 301, product registration means 302, display control means 303, product payment means 304, and transmission means 305. Note that the functional configuration of the control unit 300 of the first tablet terminal 311 is not limited to this configuration.

The product master data acquisition means 301 acquires the product master data. Specifically, the product master data acquisition means 301 acquires the product master data stored in the memory of the cloud server 1 or the edge server 2. Then, the product master data acquisition means 301 stores the acquired product master data in the RAM 33.

The product registration means 302 performs the product registration processing on the read product. Specifically, on the basis of the value obtained by reading the symbol applied to the product by the scanner 314, and the product master data 331 stored in the RAM 33, the product registration means 302 registers the product information related to the product.

The display control means 303 performs display control to output the product information about the registered product. Specifically, the display control means 303 performs display control to output the product information about the product after the product registration by the product registration means 302, to the display unit 42.

The product payment means 304 performs the payment processing for the registered product. Specifically, on the basis of the product information about the products after the product registration by the product registration means 302, the product payment means 304 calculates a total amount of money of the products after product registration, for settlement of the total amount of money with an amount paid by the customer.

For example, the product payment means 304 cooperates with the card reading unit 43 to receive an input of product sales on the basis of the customer code read by the card reading unit 43, and calculates the total amount of money of the products after product registration, on the basis of the product information about the product after the product registration by the product registration means 302, for settlement of the total amount of money with the amount paid by the customer. In addition, for example, the product payment means 304 cooperates with the change machine 316 to store bills and coins input by the customer, and calculates the total amount of money of the products after product registration, on the basis of the product information about the product after the product registration by the product registration means 302, for settlement of the total amount of money with the amount paid by the customer. Then, the product payment means 304 outputs the product sales information related to the product for which payment has been made, to the RAM 33.

The transmission means 305 transmits the product sales information. Specifically, the transmission means 305 transmits the product sales information 334 that has been output by the product payment means 304 to the RAM 33, to the edge server 2. In addition, the transmission means 305 transmits the printing information. Specifically, the transmission means 305 transmits, to the printer 313, the printing information indicating the information to be printed on the receipt and corresponding to the product sales information 334 that has been output by the product payment means 304 to the RAM 33.

FIG. 6 is a block diagram illustrating an exemplary functional configuration of the edge server 2 according to the present embodiment. As illustrated in FIG. 6, the control unit 200 of the edge server 2 includes acquisition means 201, storage means 202, and transmission means 203. Note that the functional configuration of the control unit 200 of the edge server 2 is not limited to this configuration.

The acquisition means 201 acquires the product master data. Specifically, the acquisition means 201 acquires the product master data 142 stored in the memory 14 of the cloud server 1 at a predetermined cycle. Here, the predetermined cycle is, for example, once a day. Furthermore, the timing of acquiring the product master data 142 is, for example, before opening of the store. Note that the predetermined cycle is not limited to this cycle.

In addition, the acquisition means 201 acquires the product sales information. Specifically, the acquisition means 201 acquires the product sales information 334 indicating a product for which payment has been made on the first tablet terminal 311, every time payment for the product is made on the first tablet terminal 311.

The storage means 202 stores the product master data. Specifically, the storage means 202 stores the product master data 142 acquired by the acquisition means 201, in the memory 24. In addition, the storage means 202 stores the product sales information. Specifically, the storage means 202 stores the product sales information 334 acquired by the acquisition means 201, in the memory 24.

The transmission means 203 transmits the product sales information. Specifically, the transmission means 203 transmits the product sales information 244 acquired by the acquisition means 201 and stored in the memory 24, to the cloud server 1. Furthermore, the transmission means 203 transmits the product master data 242. Specifically, the transmission means 203 transmits the product master data 242 stored in the memory 24 to the first tablet terminal 311 at predetermined timing. Note that the predetermined timing is, for example, timing at which the first tablet terminal 311 acquires the value obtained by reading the symbol applied to the product by a scanner 344.

Meanwhile, as described above, the edge server 2 manages the plurality of edge devices 3 via the communication network 5. Therefore, for example, when transmission and reception increase in communication between the edge server 2 and the plurality of edge devices 3, a delay in communication may occur. For example, when the first tablet terminal 311 accesses the product master data 142 in the cloud server 1 via the edge server 2 to acquire the product information, for registration of a product read from the scanner 314 in a product transaction, communication to the cloud server 1 occurs every time by the number of products.

When the transmission and reception between the edge server 2 and the first tablet terminal 311 increases, there is a possibility that a time required for product registration increases depending on a network environment, or this may lead to the pressure of the network environment due to a load on the network environment.

Therefore, in order to reduce access to the cloud server 1, the first tablet terminal 311 according to the present embodiment acquires the product master data 242 stored in the memory 24 of the edge server 2, as the product master data 331, and holds the product master data 331 in the RAM 33, for use in the product transaction. In addition, the edge server 2 according to the present embodiment acquires the product sales information 334 from the first tablet terminal 311, and stores (accumulates) the acquired product sales information 334 in the memory 24.

Then, the edge server 2 transmits the product sales information 244 stored in the memory 24 to the cloud server 1 at predetermined timing. Here, the predetermined timing is preferably, for example, a time zone in which a load on the network in the cloud server 1 decreases, such as timing after closing time of the store.

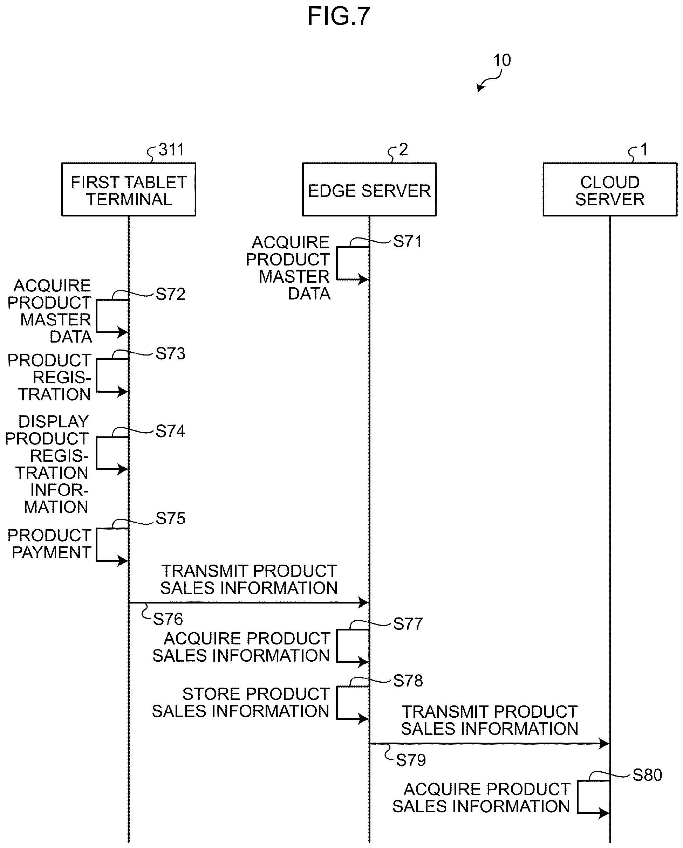

Next, a control process in the information processing system 10 will be described with reference to FIG. 7. FIG. 7 is a sequence diagram illustrating an example of the control process in the information processing system 10 according to the present embodiment. The sequence diagram illustrated in FIG. 7 illustrates a process in which the edge server 2 acquires the product master data 142 from the cloud server 1 and transmits the product sales information 244 to the cloud server 1.

In Step S71, the acquisition means 201 of the edge server 2 acquires the product master data 142 stored in the memory 14 of the cloud server 1 at the predetermined cycle (Step S71).

In Step S72, the product master data acquisition means 301 of the first tablet terminal 311 acquires the product master data 242 stored in the memory 24 of the edge server 2. Then, the product master data acquisition means 301 stores the acquired product master data 242, as the product master data 331 stored in the RAM 33 (Step S72). In Step S73, on the basis of a value obtained by reading a symbol applied to a product by the scanner 314 and the product master data 331 stored in the RAM 33, the product registration means 302 of the first tablet terminal 311 registers the product information related to the product (Step S73).

In Step S74, the display control means 303 of the first tablet terminal 311 performs display control to output the product information about the product after the product registration by the product registration means 302, to the display unit 42 (Step S74). In Step S75, on the basis of the product information about the products after the product registration by the product registration means 302, the product payment means 304 of the first tablet terminal 311 calculates a total amount of money of the products after product registration, for settlement of the total amount of money with an amount paid by the customer (Step S75). In Step S76, the transmission means 305 of the first tablet terminal 311 transmits the product sales information 334 that has been output by the product payment means 304 to the RAM 33, to the edge server 2 (Step S76).

In Step S77, the acquisition means 201 of the edge server 2 acquires the product sales information 334 indicating a product for which payment has been made on the first tablet terminal 311, every time payment for the product is made on the first tablet terminal 311 (Step S77). In Step S78, the storage means 202 stores the acquired product sales information 334, as the product sales information 244 stored in the memory 24 (Step S78). In Step S79, the transmission means 203 transmits the product sales information 244 acquired by the acquisition means 201 and stored in the memory 24, to the cloud server 1 at the predetermined timing (Step S79).

In Step S80, the control unit 200 of the cloud server 1 acquires the product sales information 244 transmitted from the edge server 2 (Step S80). Performance of this process enables the cloud server 1 to acquire the product sales information 334 about the product for which payment has been made on the first tablet terminal 311.

As described above, the edge server 2 of the present embodiment acquires and accumulates the product sales information indicating the product for which payment has been performed, from each of the first tablet terminals 311, and transmits the accumulated product sales information to the cloud server 1 at the predetermined timing.

This configuration enables reduction of the edge server 2 can reduce the number of times of communication and the frequency of communication with the cloud server 1. Therefore, the edge server 2 can reduce occurrence of the delay in communication between the edge server 2 and the plurality of edge devices 3 due to communication with the cloud server 1.

In addition, the edge server 2 acquires, from the cloud server 1 at a predetermined cycle, the product master data indicating information in which the code information related to the product code uniquely assigned to each product is associated with the product information related to the name, price, and product classification of the product. Furthermore, the edge server 2 provides the product master data 242 to the first tablet terminal 311 at the predetermined timing. In the information processing system 10, this configuration enables reduction in opportunity of access to the cloud server 1 or the edge server 2 by the first tablet terminal 311 for reference to the product master data, and network traffic in the communication network 4 or the communication network 5 can be reduced.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the methods and systems described herein may be made without departing from the spirit of the inventions. The accompanying claims and their equivalents are intended to cover such embodiments or modifications as would fall within the scope and spirit of the inventions.

### (First modification)

In the embodiments described above, a form has been described in which the first tablet terminal 311 acquires the product master data 242 stored in the memory 24 of the edge server 2, as the product master data 331, and holds the product master data 331 in the RAM 33, for use in the product transaction, but the present invention is not limited to this form. For example, the product master data acquisition means 301 of the first tablet terminal 311 refers to the product master data 242 stored in the memory 24 of the edge server 2 at the timing when the scanner 314 reads the symbol applied to the product. At this time, the storage means 202 of the edge server 2 stores the product master data 142 acquired by the acquisition means 201, in the memory 24 so as to enable the first tablet terminal 311 to refer to the product master data.

### (Second modification)

For example, provision of the product master data 242 stored in the memory 24 of the edge server 2 to the first tablet terminal 311 may be switched according to a request (instruction) from the edge server 2. For example, when a decrease in communication speed between the edge server 2 and the cloud server 1 is detected, the edge server 2 may transmit the product master data 242 from the edge server 2 to the first tablet terminal 311, or may transmit, to the first tablet terminal 311, an instruction for the first tablet terminal 311 to acquire/refer to the product master data 242 on the edge server 2.

### (Third modification)

For example, the product master data acquisition means 301 of the first tablet terminal 311 may be allowed to determine to acquire the product master data 242 from any one of the cloud server 1 and the edge server 2, according to a communication status.

### (Fourth modification)

For example, the first tablet terminal 311 and the second tablet terminal 312 may be the same device. Furthermore, when the first tablet terminal 311 and the second tablet terminal 312 are separate devices, the second tablet terminal 312 may acquire/refer to the product master data 242 stored in the memory 24 of the edge server 2, as in the first tablet terminal 311.

Note that a program executed in the edge server 2 according to the embodiment is provided by being recorded on a computer-readable recording medium, such as a CD-ROM, flexible disk (FD), CD-R, or digital versatile disk (DVD), in the form of installable or executable file.

Furthermore, the program executed by the edge server 2 according to the embodiment may be configured to be stored on a computer connected to a network such as the Internet and provided by being downloaded via the network. Furthermore, the program executed by the edge server 2 of the embodiment may be configured to be provided or distributed via the network such as the Internet.

### REFERENCE SIGNS LIST

- 1: CLOUD SERVER
- 2: EDGE SERVER
- 3: EDGE DEVICE
- 10: INFORMATION PROCESSING SYSTEM
- 200: CONTROL UNIT
- 201: ACQUISITION MEANS
- 202: STORAGE MEANS
- 203: TRANSMISSION MEANS
- 300: CONTROL UNIT
- 301: PRODUCT MASTER DATA ACQUISITION MEANS
- 302: PRODUCT REGISTRATION MEANS
- 303: DISPLAY CONTROL MEANS
- 304: PRODUCT PAYMENT MEANS
- 305: TRANSMISSION MEANS
- 311: FIRST TABLET TERMINAL
- 312: SECOND TABLET TERMINAL

### CITATION LIST

### Patent Literature

Patent Literature 1: JP H4-247597 A

## Claims

1. An information processing device communicably connected to a higher-level external device, communicating with a plurality of devices provided in a store in which the information processing device is installed, and performing information processing related to the store based on information transmitted from each of the devices, the information processing device comprising:
acquisition means that acquire product sales information indicating a product for which payment has been made on the device;
storage means that stores the product sales information acquired by the acquisition means, in a storage unit; and
transmission means that transmits the product sales information stored in the storage unit, to the external device at predetermined timing.

2. The information processing device according to claim 1, wherein
the acquisition means acquires, from the external device at a predetermined cycle, product master data indicating information in which code information related to a product code uniquely assigned to each product is associated with product information related to a name, price, and product classification of the product.

3. The information processing device according to claim 2, wherein
the transmission means transmits the product master data to the device at predetermined timing.

4. The information processing device according to claim 2, wherein
the storage means stores the product master data in the storage unit so as to enable the device to refer to the product master data.

5. An information processing program causing
a computer of an information processing device communicably connected to a higher-level external device, communicating with a plurality of devices provided in a store in which the information processing device is installed, and performing information processing related to the store based on information transmitted from each of the devices, to function as:
acquisition means that acquire product sales information indicating a product for which payment has been made on the device;
storage means that stores the product sales information acquired by the acquisition means, in a storage unit; and
transmission means that transmits the product sales information stored in the storage unit, to the external device at predetermined timing.
